# EUROPEAN PATENT SPECIFICATION

(11) **EP 3 284 883 B1**
(45) Date of publication and mention of the grant of the patent: **05.08.2020**
(21) Application number: 17190321.4
(22) Date of filing: 12.11.2013
(51) Int. Cl.: F03D 13/10, F03G 3/00, E04H 12/34, F03D 9/16

(54) **SELF-ERECTING TOWER**
SELBSTERRICHTENDER TURM
TOUR À MONTAGE AUTOMATIQUE

(30) Priority: 12.11.2012 ES 201201037
(43) Date of publication of application: 21.02.2018
(62) Divisional of application: 13853279.1
(73) Proprietor: Gascón Merino, Pablo, 02230 Madrigueras (Albacete) (ES); WUNDER HEXICON, S.L., 35214 Teide (Las Palmas) (ES)
(72) Inventor: Gascón Merino, Pablo, 02230 Madrigueras (Albacete) (ES)
(74) Representative: Pons

(56) References cited:
- DE-A1- 3 333 715
- DE-A1-102006 003 897
- DE-A1-102012 203 883
- ES-T3- 2 248 034
- US-A- 3 789 565
- US-B1- 6 220 394

## Description

### Technical field

The invention belongs to the field of the Energy Industry and, especially, to the field of renewable energies, wherein the production of electric power cannot be regulated, owing to the uncertainties of Nature, which is not a constant source of energy, and it is necessary that the energy is stored, so that a supply of energy is available during those periods where a renewable source of energy is not available, or during the peak hours of the day, where the power output cannot meet the energy demand. To that effect, a specific design is used, that can be modified and adapted to be used in sectors with similar needs. This design allows to use a self-erecting tower, without the need for large cranes or special transportation means for its assembly.

### Current state of the art

Currently, the most widely used energy storage systems are the following: Hydro pumping, which performs the reverse cycle of a hydroelectric plant. It has two reservoirs located at different heights, forming a closed-loop system. In principle, the pumping station is housed at the lower reservoir, which is fed with the excess power. The reservoir located at the higher level begins to store water, so that it may subsequently perform the work of a conventional hydroelectric plant, i.e., a typical waterfall. However, this method entails the following disadvantages:

The use of water is unavoidable and, consequently, this method can be only used in sites with water surpluses, as it is necessary to take into account water infiltration and evaporation.

It also requires large amounts of space.

A minimum gradient is required between the two reservoir levels.

It involves a huge environmental impact, as well as large civil works projects.

It can be affected by seismic activity, acts of God or criminal actions, with enormous consequences, in case of dam collapse, that have not been presently foreseen.

High price and very specific technology.

This method does not allow a modular and staged construction, with a staggered investment that is reasonable and allowable for any economy.

It can be exclusively used by multi-national companies (we shall not mention mini power plants, as they are not actually energy storage devices).
Compressed gas storage facilities: This method is used with underground natural cavities or porous limestone areas wherein the gas - normally air, although there are also natural gas storage areas in cavities (for instance, in Yela-Brihuega, Guadalajara) - is injected by means of compressors and, subsequently, when the gas is released, passes through a set of turbines coupled to a generator. The performance obtained is lower than in the case of hydro pumping, and the drawbacks of this method are:

It requires the implementation of third processes, i.e., the increase in pressure may entail a change of state, involving the condensation and freezing of water. Consequently, natural gas must be burnt to offset this problem.

The construction of the facilities requires a very specific technology.

The sites are very specific, and the affected areas are vary large.

It can be affected by seismic activity, acts of God or criminal actions, with enormous consequences, in case that the cavity collapses, that have not been still calculated and with unknown consequences in case of accident.

Environmental impact. If the cavity is not an exhausted gas field, the medium will be altered, and the natural course of underground rivers will even be modified by the gas pressure; we must imagine a siphon wherein pressure is being gradually applied to the upper area.

This method does not allow a modular and staged construction, with a staggered investment that is reasonable and allowable for any economy.

It can be exclusively used by multi-national companies.
Batteries: They are simply a multiple set of batteries connected each other, and its operation is based on the transfer of ions between the different components, as a result of an electrochemical process. Current will flow in two directions, depending on whether it is a charging or discharging process. Many materials are used, among them, the traditional lead and acid components, but more advanced batteries based on the use of melted salts and sulphur, lithium, vanadium, cadmium, melt metals (magnesium and antimony), superconductors, etc. can also be used, with the advantage that they can be manipulated after their manufacturing. This kind of storage units are subject to constant research aimed at their optimisation and development, and they rapidly become obsolete. Currently, the main inconveniencies posed by this method are:

Very high price, they quickly become obsolete.

Limited service life, and decreasing performance based on the number of cycles completed.

Environmental impact, both at the production and recycling stages, assuming that they are recycled, as many pollutant wastes are generated.

They are produced in developing countries, or in countries where the fulfilment of environmental standards has been set aside; they are used in developed countries and subsequently recycled in their countries of origin (refer to the cadmium release in Liuzhou, China, with more than four million citizens affected).

This method requires maintenance tasks, the batteries are quite bulky and gases are generated. They may even burn.

These batteries contain heavy metals, which directly produce tumours and they are highly pollutant for the environment during long periods.

Although they can be adapted to any type of facilities, this method requires large ventilated areas.
Thermal storage systems: as a general rule, solar collectors project the light beam and concentrate it on a series of oil ducts. If so required, this oil can be used to obtain steam for the operation of turbines; otherwise, it will be used to heat the salt, by means of exchangers. Thus the temperature obtained will be subsequently used to generate steam and operate the turbines once again. Among the inconveniences posed by this technology, the following ones could be mentioned:

Any thermal process involves losses.

This method is used by thermosolar plants only.

It is an expensive process, and it is difficult to maintain the temperatures over time (max. 20h).

Each pipe, or each time the oil passes through the exchanger represents a loss of performance; furthermore, the high temperatures involve high pressures, and thus, very specific facilities, since salt is very corrosive and the properties of materials decrease over temperature.

This method does not allow a modular and staged construction, with a staggered investment that is reasonable and allowable for any economy.

It can be exclusively used by multi-national companies.
Hydrogen: the energy density of hydrogen exceeds that of petrol, but the hydrolysis, the catalysts required, etc... make it a extremely expensive process. On the other hand, hydrogen is an explosive gas and must be liquefied or compressed to be stored. Up to the present time, this process is undergoing the development stage. Wave energy facilities: They consist of the construction of dams and their subsequent use as a hydroelectric plant. The following are some of the inconveniencies posed by this technology:

Obviously, it can only be used in areas covered by tides, and with a geography which allows the construction of dams.

They involve a high environmental impact, both in terms of their construction and as a consequence of the disturbance of the natural tidal process.

These facilities are very costly and scarcely reliable in case of adverse weather conditions.

Corrosion is much higher than in the case of fluvial processes, and therefore, turbines must be of a specified type. Normally, they do not allow a modular and staggered construction to achieve a staggered investment which is reasonable and is allowable for any economy. This technology can be used by multinational companies only.
US3789565A discloses a self-erecting tower according to the preamble of claim 1.

### Sources

Investigación en ciencia, April 2012, No. 427, p. 67 .

Pdf Publication: pontificia universidad católica de Chile, Energy Engineering Master Degree IEN 3320 Energy Markets.
Tower assemblies: currently, towers are assembled by means of heavy lift cranes, inserting the partial sections of the tower, with their respective connection technologies. Climbing scaffolds with continuous setting technology have also been used. The tower assembly process can be appreciated on the Internet, by visiting the websites of the manufacturers.

These current processes, although they fulfil their function, to a greater or lesser extent, show significant deficiencies, that have not been solved by their respective technologies. The Helical Energy Storage Unit that is the subject matter of this description represents a significant improvement compared with the current state of the art that has been described in the preceding paragraphs.

### Summary of the Invention

In order to fill the aforementioned gaps and shortages, in connection with the storage of residual power and the construction of towers, this "Helical Energy Storage Unit" represents an integral system for the storage of excess power obtained from the output generated by renewable power plants and for the construction of towers, which is especially suitable for the wind power generation industry, considering the geometry of the invention, but that can be also adapted to any other power generation system, both of a renewable or conventional type, without requiring any specific location or technologies, huge investments or third processes. The invention does neither require any specific civil works since it makes possible to dispense with special transportation means and large cranes, since the tower sections are erected by means of their own self-erection mechanism.

Consequently, we understand that there are different processes that can be used to store energy: mechanical energy, the sum of kinetic and potential energy, chemical energy, thermodynamic energy and mixed energies. And that for the assembly of the towers currently used, we require special cranes at all times and, in most cases, special transportation means.

The operation of the process that will be described hereinafter is based on the conversion of the excess of power into kinetic energy and its storage as potential energy. The process would consist of the rising of a platform, by means of a gear operated by an engine, along a toothed ramp, with a specific load and slope, and the subsequent release of the brake and the conversion of the engine into a generator. The ramp has the peculiarity that it becomes a helix inside a straight cylinder (it would not be so advantageous if the conversion would occur outside the cylinder) which rises vertically the assembly up to the point where it is required, and then, the assembly falls to recover the energy supplied. Similarly, the rising platform allows the adaptation of a simple tool for the hoisting of the different sections, which in turn allows the self-erection of the tower.

Thus, it is possible to resolve the aforementioned inconveniencies, since: large areas of terrain are no longer required, since the assembly is erected vertically.
civil works are within normal limits and it is not a mega-structure, as complex as as a dam.
in case of seismic incidences, they will have only material consequences, since there will be neither spills, nor leaks of liquid components or gases. Carcinogenic materials will also be absent.
no explosions can occur.
accumulations of water, large natural cavities, etc. are not required.
it is not a process which is undergoing its development stage, since it uses sophisticated, but up-to-date and reliable devices. It is a broadly used technology which allows a plurality of methods of manufacturing, steel forging, concrete precasting,...
it does not require third extra processes, such as the burning of natural gas, changes of state, thermal exchangers...
It does not require large facilities with a high maintenance cost, as opposed to pumping and compression stations.
the performance remains constant along the use cycles.
the method does not use heavy metals, and the manufacturing facilities are not located at developing countries.
the energy accumulated is maintained for an unlimited time, until it is used.
it does not change as a result of weather inclemency.
It can be used by many industry sectors, and not only by large utilities companies.
The construction method can be adapted to the already existing technologies to complement them, especially in the case of wind generation, since it cuts the execution costs and the repayment of wind farms, as it can be simultaneously used as wind turbine tower and accumulator, as a single item.
It allows to obtain the maximum benefit from renewable energies, since the regulation of the engines allows from a minimum output level, not suitable for feed-in, to a standard production (wind, wave, solar and thermal plants...).
generators are not subject to any speed changes, overstrain or excess pressure. environmental impact is lower than in the case of wind turbines (no noise or blades, unless it is complemented by a wind mill).
its geometry allows to dispense with large cranes for the assembly work, special transports for the different sections and large storage areas.
as far as height is concerned, its geometry is unlimited, since the design parameters can be changed to meet the torque and foundations requirements. Thus, the nacelle rotor assembly can be installed at higher levels, with the subsequent increase in performance and maintenance reduction.
The parts can be assembled by means of connectors, thus allowing to dispense with specific types of screws, using standard metal sections.

The helical energy storage unit that is the object of this invention stores energy thanks to the assembly of its different components, to obtain a complete mechanism. Such components are: 1 Foundations; 2 Tower (2.1 structure, 2.2 multi-track helical rail; 2.3 connectors); 3 Rotating platform (3.1 guide bases, 3.2 generators, 3.3 hydraulic brake assembly, 3.4 swan neck arms, 3.5 main platform, 3.6 weights and 3.7 ancillary items); 4 Power collector (4.1 central collector, 4.2 sensors, 4.3 insulated contact lines and 4.4 guiding lines); 5 elevator-staircase; 6 transformer station and 7 Dome (7.1 dome and 7.2 nacelle adapting reel, nacelle power collector). Thus, the whole assembly, and the modular nature of its different sections, allow the self-erection technique.

If we observe the attached figures, we can see the layout of the different items within the helical energy storage unit. It must be understood that this is a new system for the storage of energy - whose development calls for a financial effort - and that although the basic ideas have been reflected and defined, the precision and details of the drawings will be complemented by means of experimental tests; for instance, the helical rail allows certain variations on the basis of the number of cycles to be supported (the complete storage unit or just the tower) as well as the design of the platform, the hoisting equipment, the nacelle reel, etc., for instance. Similarly, as it has been already indicated, the technology used by the energy storage unit allows a plurality of already developed commercial-grade items and, consequently, the relevant drawings can be obviated or simplified, as they have already been included in different catalogues.

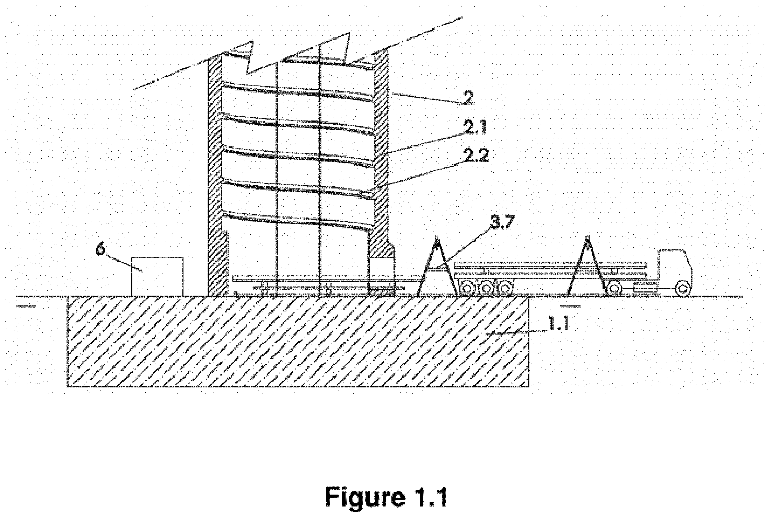

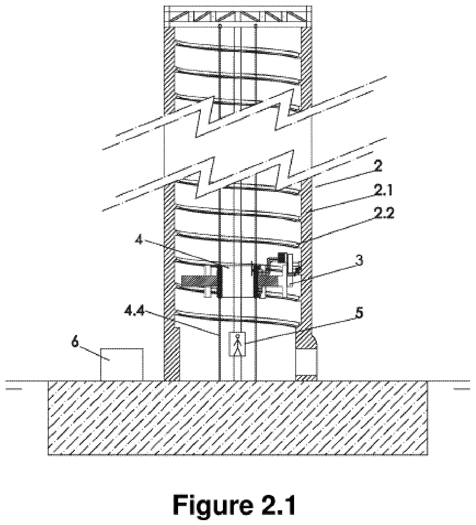

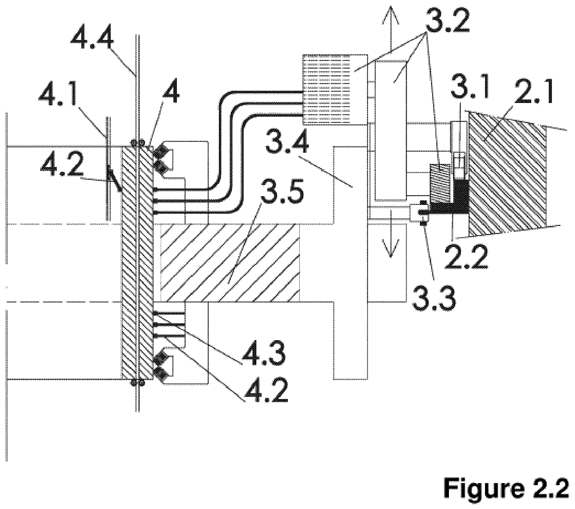

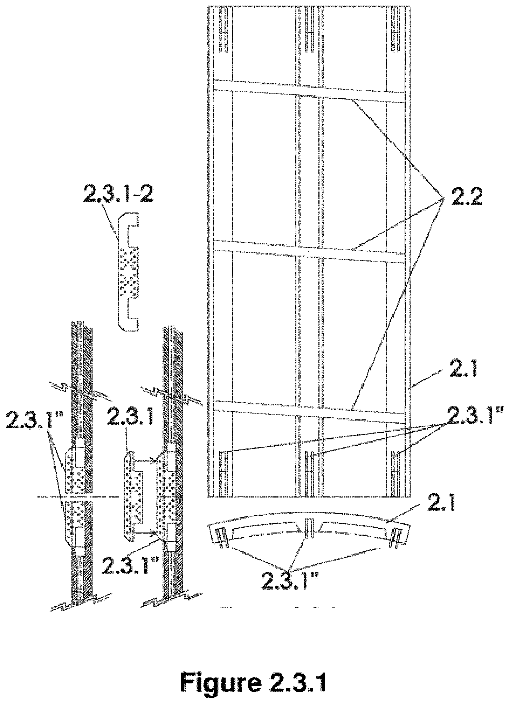

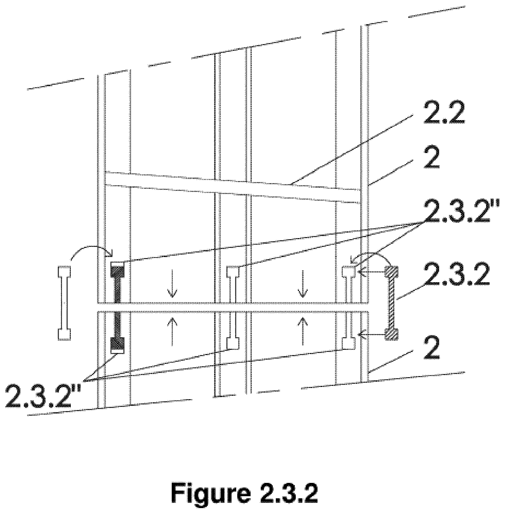

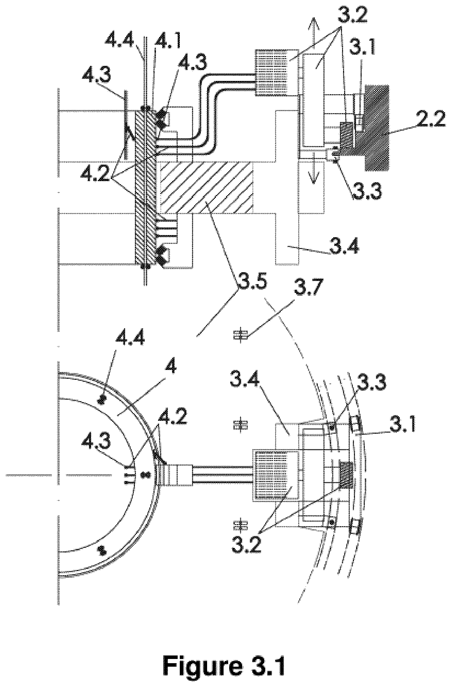

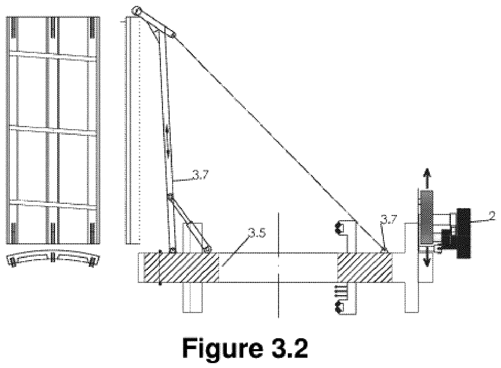

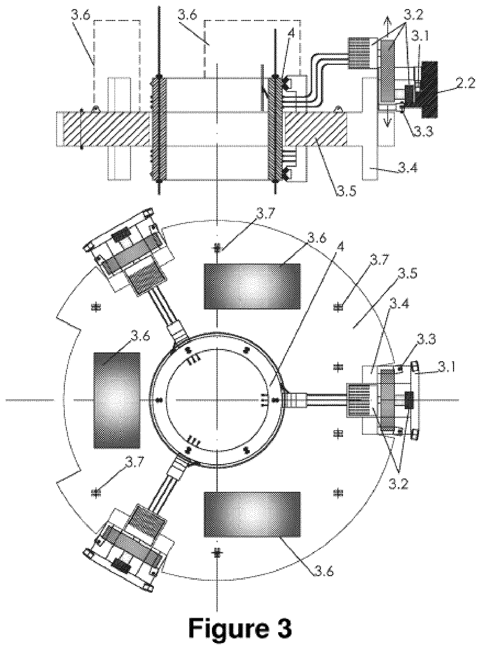

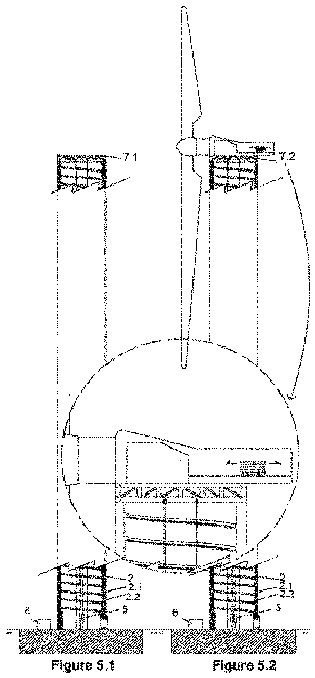

Following a bottom-top approach, the function of the main components will be explained hereinafter:
1.- Foundations: they have been designed to transmit any stress to the soil, and to provide the required stability. These are the foundations typically found in a wind turbine. According to the specific needs: 1.1 if the access door to the interior of the tower is located at the tower structure, the foundations used will be of a flat type ( Figure 1.1); 1.2 but if we want that the platform starts from the bottom of the soil, the foundations will house an access to the interior of the base of the tower. For the autonomous introduction of the sections, a rail will be placed outside, along with a bogie and two gantries, for the unloading of materials. The door will be initially designed so that it allows the introduction of the pre-cast concrete voussoir (vertically, horizontally or following an inclined path). Subsequently, the cross-section of the door will be reduced.
2.-Tower: it has been designed to support the platform during its rising, to collect potential energy, and the subsequent fall. (Figures 1.1 ; 5.1 and 5.2), while simultaneously operating as a wind turbine tower. It comprises:
   2.1.- Structure: Offering the height required to guarantee a minimum travel distance, to generate a steady power supply. Its size can be adapted to different diameters and height The geometry is similar to that of a wind generator; however, the inner section is a straight cylinder which, in turn, has a series of intermediate notches where the multi-track rail (2.2) will be screwed. It can be broken down in sections, that are identical, except those of both ends, with a polygonal geometry, either adopting the shape of a rectangle or a diamond, that allows the autonomous assembly when the platform rises through the thread generated by the helix. The axial forces exercised by the nacelle are transmitted through the reinforcements running vertically through the tower, and the continuity of such force is guaranteed by means of the connectors (2.3) and the housing (mounting pins, 2.3.1" and thermal expansion type 2.3.2") of such connectors at the ends of the reinforcement.
   2.2.- Helical multi-track rail: forming an helical console with three continuous stroke tracks (figure 2.2 and 3.1): an outer rail to support the platform on the guide base (3.1), a toothed intermediate rail for the coupling of the gear of the generator/engine (3.2) and an internal rail for the braking track (3.3). It has distributed anchorings, independent from the rail, to release the brake during long stops.
   2.3.- Connectors: These are the items in charge of transmitting the forces through the whole structure, guaranteeing the uniformity of forces. They are inserted in the housing comprised by the ends of the reinforcing (2.3"). As they are flat connectors, running perpendicularly to the longitudinal section of the tower, their cross-section can be increased without taking up too much space of the radial perimeter, optimizing the joints and allowing a standard solution, as opposed to those used with metal flanges. In turn, we have two alternatives to connect them: a connector with mounting pins (2.3.1) which is used as a bracket, and a thermal contraction connector (2.3.2) which is expanded by induction, inserted in the housing and which, after cooling, exercises the post-tensioning of the structure, since the lower length allows to achieve the desired degree of tension (by adjusting the overall length of the connector).
3.- Rotating platform: this is the item wherein mechanical energy is accumulated (conversion of electric power into kinetic and potential energy, and vice versa) and the one which subsequently returns it again as electric power. The platform (3) is supported at least on three equidistant points, and consequently, there are as many elements as supporting items (bottom guide 3.1, generator 3.2, brake 3.3, arms 3.4). During the assembly of the tower (2) the platform (3) operates as a internal crane for the different sections (2.1), through the coupling of the hoisting tool (3.7). The function of each component shall be described hereinafter:
   3.1.- Guide bases: they receive the weight of the whole assembly, which is distributed by supporting the wheels on the outer rail (2.2). The number of wheels will depend on the final weight.
   3.2.- Generators: they are coupled to the toothed rail of the tower (intermediate rail 2.2) through a gear system, and the movement of the platform (3) starts the rotation of the generator (3.2). When the platform (3) is in the lower position, the generator (3.2) will be used as an engine, taking power from the mains to raise the platform, and when said platform (3) has stored potential energy and the generator (3.2) falls, it will feed-in power to the mains. During the assembly stage, they are used as engines for the hoisting works.
   3.3.- Hydraulic brake unit: it actuates the outer track of the helical rail (2.2). The brake locks the platform (3) until energy is generated or when the power supply from the mains is cut-off if in the middle of the raising. Similarly, the brake will lock the platform (3) in case of an unforeseen situation or a blackout (3). It also has a self-standing locking mechanism, with intermediate notches distributed along the tower (2) to relieve the helical disc (2.2).
   3.4.- Swan neck arm: it is used to connect the main platform (3.5), the previously mentioned items and the tower (2). Depending on their number -at least three- they are laid equidistantly and may be vertically adjusted with respect to the propeller pitch (2.2), thus ensuring a uniform distribution of the platform (3) weight on the tower rail (2.2).
   3.5.- Main platform: this structure allows an ongoing connection to the items previously described, and is coupled to the swan neck arms (3.4) and supports the remaining components. The central area has an opening which crosses the elevator (5) and the collector (4), and this is where the sensors (4.2) coming from the generators (3.2) and the vertical guiding bearings are anchored. The size increases if the central hoisting method is adopted. The weights (3.6) are installed at the outer part, between the supports. It has a recess between every two guide bases, to allow the passing of the sections and the guide of the hoisting cable. It also houses the ancillary elements (3.7) used for manoeuvring and safety, such as the hoisting tool, the hydraulic brake assembly, the generator wiring, etc.
   3.6.- Weights: they are used to increase potential energy while saving space.
   3.7.- Ancillary elements: hoisting tool for autonomous assembly, wiring, electricity switchboards and control and operation elements.
4.- Power collector: it is used to distribute power from the generators (3.2) to the transformer station (6) and vice versa, while simultaneously reducing the cabling and, subsequently, the chances of winding. It is moved simultaneously to the rising of the platform (3) and comprises the following parts:
   4.1.- Central collector: transmits power from the generators (3.2) of the platform (3) to the insulated contact line (4.3). It is moved simultaneously to the platform (3) during the horizontal movement, and slides vertically on the guiding lines (4.4).
   4.2.- Insulated sensors: they are used as a railway pantograph, and each pole transmits power through a tracker to the relevant wire located on the outside section of the collector 4.1).There is an inner sensor (4.2) for the straight insulated contact line (4.3) and an outer sensor (4.2) for the circular insulated contact line (4.3).
   4.3.- Insulated contact lines: as in the case of a gantry crane, these are internal cables laid on insulated metal sections. They are laid straight vertically with respect to the tower and in the outer circular section of the collector (4.1).
   4.4.- Guiding lines: these are structural cables that cross the collector body (4.1) and keep it always in the same relative position during the rising operation, preventing it from turning. It comprises guide bearings at the ends of the central collector (4.1).
5.- Elevator-staircase: depending on the final height of the assembly, a staircase or a staircase-elevator assembly will be installed, to perform maintenance tasks on the equipment. It runs through the central area of the tower (2), crossing the platform (3) and the collector (4) to reach the dome (7). It includes all the safety elements typical of a wind generator. Depending on the final shape of the tower (2), gantry crane sections can be even used as the staircase, the collector guides and the support of the insulated contact lines.
6.- Transformer station: the input and output voltages of the storage unit are adapted depending on the task to be performed.
7.- Dome or nacelle adapting reel. This point represents a very important application of the storage unit, as it allows such unit to be adapted for the coupling of a wind generator nacelle. Therefore, two choices are available:
   7.1.- Dome: when the tower (2) has no nacelle on it, it is used as a ceiling and support for the items located at the upper part of the tower (2). The guiding line tensors (4.4), insulated contact lines (4.3) and the elevator-staircase (5) are coupled to the dome, as well as the protection elements against lightning storms.
   7.2.- Nacelle adaptation reel: the proper sizing of the tower allows the integration between the storage unit and a wind generator, adapting the upper flange by means of a reel that would move the nacelle towards the exterior, against the axis, to overcome the bending of the blades vis-à-vis the straight section of the tower (2). Also, if the blades of the mill are shorter than the last section of the wind generator, this section can be coupled to the tower (2) of the storage unit (hybrid towers). Simultaneously, it has a rail and a set of weights aligned with the rotor axis of the wind generator, and consequently, when one load is moved, the weights are balanced on the tower axis (2), both statically and dynamically. The connectors of the collector (4) are anchored to a fixed lattice under the reel platform, as well as the eventual tensioning lines and the elevator-staircase (5). As in the case of the power collector of the platform, the nacelle has its own collector, to allow the on-going rotation of the nacelle.

### Description of the drawings

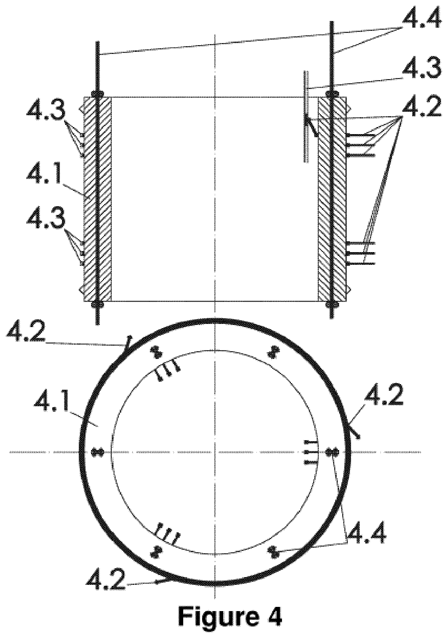

The mechanics of the helical energy storage unit according to this invention can be inferred from the assembly of the components within the drawings (the numbering depends on the group and subgroup): detailed view of the foundations and autonomous unloading of sections (figure 1.1); tower (figure 2.1), detailed view of the rail support (figure 2.2) and detail of connectors (figures 2.3.1 and 2.3.2); platform (figure 3), detailed view of the platform (figure 3.1) and detailed view of the ancillary hoisting element (3.2); power collector (figure 4); dome (figure 5.1), nacelle adaptation reel (figure 5.2). The final shape of the components may be different, as it must be adapted to the different requirements in terms of load, market economy or client, although the main function will remain unchanged.

Most of the components of the storage unit have been obtained from commercial catalogues; consequently, such items do not need to be described. The operation of the assembly, as it has been already mentioned, has a series of concepts that are very easy to understand, despite their complexity. Obviously, it will be understood that the assembly is part of a prototype and, once it has been accepted, it should be finally designed by means of calculation of finite elements (structure /fatigue/electrical/thermal...), and consequently the final geometry, instead of the function, may undergo changes. In an effort to clarify any doubt, the different figures will be examined hereinafter.
1.- Foundations: their shape depends on the type of soil, i.e., the allowable stress of the soil. We start on the flange used to house the base of the tower (2):
   1.1.- Levelled access, which starts directly at the reinforcing system, to house the lower flange of the tower (2), and can be extrapolated from the wind generators. In front of the door there are gantries, rails and a bogie (3.7) for the autonomous unloading of pre-cast concrete voussoirs.
   1.2.- Access at different levels; in this case, the access door is at a distance of some meters from the tower (2), the access leads to the foundations base to directly access the centre of the tower. This way, a longer path can be obtained at the multi-track rail (2.2) as well as an increase in the stability of the tower, since the door section is not present.
2.- Tower: the internal structure of the tower corresponds to the shape of a straight cylinder with a hollow inside area, so that it can be traversed by the platform (3), although the outer part can be modified. The inside part of the tower has a series of intermediate notches for the rail (2.2).
   2.1.- Structure: it is formed by a cylinder with a hollow inside area of variable thickness, depending on the diameter and the height, while the exterior shape can vary. The inner side may comprise a series of intermediate notches for the rail (2.2) or a helical shape that runs throughout the whole height. Since it is of a modular type, all the sections are similar, either of a rectangular or trapezoid shape, with the exception of the closing means, that are variable in length, and allow that the joint between the base and the reel is flat. Vertically, the traction generated by the force received from the nacelle is supported by a cable or by a highly resistant metal section; both of them are finished by a "U" shape (2.3.1-2) to insert the connectors; in turn, it may house a locking flange. Horizontally, connectors will also be used between the brackets and at the intermediate points (pin 2.3.1" and thermal 2.3.2").
   2.2.- Helical multi-track rail: it is a bracket with a specific staggered shape, wherein the outer higher rail -toothed or flat- is supported by the guides (3.1); the intermediate one is a toothed rail, to be coupled to the generator group (3.2); and the inner, lower one, is flat, and forms a helical disc, so that the hydraulic brake group (3.3) can be operated. The pitch of the blade may differ, based on the weight and diameter of the platform (3). The insertion points with the joints of the different sections of the tower are reinforced at their lower side to prevent bending. The rail (2.2) may be screwed or integrated in the manufacturing of the structure panel.
   2.3.- Connectors: both options perform the same function, although their shapes differ: The Connector with mounting pins (2.3.1) is a plate with an opening layout that coincides with the head of the pre-stressed stringline, and their ends can be flat or incorporate an "U"-shaped header, to support increased efforts (2.3.1-2) (which allows induction). The thermal contraction connector (2.3.2) is a "double T" section which fits into the housing of the pre-stressed stringline and which also admits machined cylindrical metal sections.
3.- Rotating platform, which is divided as follows:
   3.1.- Guide bases: As in the case of an endcarriage of a gantry crane, they have at least two wheels supported against the rail on a beam -straight or slightly curved - that houses them, and that are orientated according to the bending of the tower rail (2.2) with a correction of the pitch height. If necessary, traction can be received for the rising, although the maintenance of of the generator (3.2) should be independent from the remaining components. It is screwed to the Swan Neck arm (3.4).
   3.2.- Generator group: This is an engine-generator which, through a gearbox, is coupled to the helical toothed rail (2.2), and may comprise two intermediate drive gears to alleviate the forces supported by the intermediate rail.
   3.3.- Hydraulic brake group: It is a hydraulic brake with two claws that actuate the braking rail track (2.2). Obviously, there is one per each arm, as in the case of the guide bases (3.1) and generators (3.2). It also operates the standby lock to relieve the disc.
   3.4.- Swan neck arm: it is a machined beam screwed on the main platform (3.5) and which houses the three aforementioned items, thus regulating the relative pitch of the blade (2.2) between the angle formed by each arm. Each arm allows different vertical anchoring points.
   3.5.- Main platform: This is a lattice-shaped circular structure, whose diameter is slightly lower than the diameter of the interior of the tower (2.2) and with a central ring whose diameter is sufficient for the crossing of the elevator (5) and the collector (4). Adjacent to the inner diameter we find, on the one hand, the attachment means of the bent sensors (4.2) for the collector follow-up and, on the other hand, the set of bearings that guide, both radially and vertically, the lower and upper flanges of the collector. The outer side comprises a series of radial grooves allowing the regulation of the height of the assembly comprised by the top guide base (3.1)-generator (3.2)-brake (3.3). There is also one location for the screwed arrangement of the weights (3.6) and ancillary elements (3.7). Among two of the guide bases there is a recess that allows the internal hoisting of the sections, and the hoisting tool is screwed adjacent to them, towards the third guide base. Thus, it operates as a gantry crane on the platform, allowing the hoisting, both internally and externally. The lower section of the recessed area comprises a series of guides for the hoisting cable, thus preventing any friction.
   3.6.- Weights: their shape may vary, on the basis of the material used. They can be cubic and stackable - as in the case of gantry cranes and truck cranes - or flat, arranged as a slab on the ring-wedge shape (3.5) of the platform.
   3.7.- Ancillary items: the hoisting tool is an adaptation of the loading gantry, and the remaining ones can be found in the market, such as wiring, electricity switchboards or control and operation items.
4.- The Energy collector, which may be broken down as follows:
   4.1.- Central collector: it is an insulating perforated cylinder. The diameter of the central opening allows the passing through of the elevator (5) and the insulated vertical contact lines (4.3) while the flat sensors (4.2) used for the follow up of the vertical insulated contact lines (4.3), which in turn are interconnected with the relevant external ring are located inside. The collector body (4.1) has a series of openings at the vertical of the axis, for the passing through of the guiding lines (4.4) that prevent it from turning along with the platform, while a series of rollers are arranged at the ends, for guiding purposes. The outer side houses the circular insulated contact lines (4.3) that may include more than one per each generator pole. They consist of a closed circular ring; the curved follow-up sensors (4.2) that part from this platform (3.5) operate over these lines (4.3). The outer base and the head incorporate a flange-shaped track for the parallel guiding of the collector on the vertical axis used to support the bearings.
   4.2.- Sensors: these are sensing devices for the insulated contact lines (4.3) that can be obtained from commercial suppliers along with those lines. They can be flat or curved, depending on the type of line to be followed. They comprise a spring to press the surface of the track wherein they run (4.3).
   4.3.- Insulated contact lines: their geometry will depend on the power and range selected, within the commercial catalogue. They will always consist of an open metal section with inner copper coating and exterior insulation. Vertical lines are arranged inside the collector (4.1) and the horizontal circular lines are arranged outside the collector.
   4.4.- Guiding lines: they consist of a steel cable with a ring at one of the ends and a tensor at the other one. Once again, their geometry will be obtained from a commercial catalogue.
5.- Elevator-staircase
   Elevator: It comprises a two in one staircase. The geometry is defined by a certified manufacturer, although it is based on a staircase with oversized side bars that house a low-profile gear wherein the elevator cage operates. To avoid excess wiring, it also uses insulated contact lines for power supply. The opposite part includes a life line and intermediate platforms.
   Staircase: it will comprise a simple geometry, by means of rigid modules that are subsequently traversed by a tensioning cable. It is also designed through an approved manufacturer.
6.- Transformer station: its description is not required, since this is an already designed and manufactured ancillary item; there are many commercial ranges and manufacturers available.
7.- Dome-Nacelle adapting reel
   7.1.- Dome: this is a lattice-type enclosure which has been reinforced with beams, The base houses a continuous curved beam used as a flange. The centre area houses the notches for the anchoring of the elevator, the staircase and the guiding lines (4.4). The lattice incorporates a walkable roof used for maintenance purposes. 7.2.- Nacelle adapting reel: this is a cylindrical reel which comprises an internal platform with beams that support the nacelle, which is offset from the centre (sufficiently as to allow that the bending of the blades does not lead them to touch the tower). Thus, a reel is obtained, comprising a roller and rail system that allows the wobbling of the nacelle platform, by means of a series of toothed rims or adapted guide bases. The nacelle platform comprises a lattice framework, which distributes the forces throughout the reel (7.2). Simultaneously, it has a rail and a set of weights aligned with the axis of the rotor of the wind generator. Thus, the movement of the load involves the balancing of the weights over the rotor axis ( figure 5.2). The connections of the collector (4), and the elevator-staircase assembly (5) are anchored under the platform to a fixed lattice, as well as the connections used to ensure the pretensioning. It also has a power storage unit between the nacelle and the tower, to allow the continuous rotation of the elements.

### Embodiment of the invention

From the description of the drawings, the arrangement and the coupling method of the different components that comprise the "Helical energy storage unit" can be appreciated. Considering its geometry, the materials and the technology used, the method implemented for the manufacturing of the storage unit assembly is very similar to the method employed with a wind generator. However, the intention is to use items that can be usually found within the market, in an effort to contain costs. The description of the embodiment is as follows:
1.- Foundations: This is a civil work made with reinforced concrete joined to a flange embedded within the foundations assembly. The parts that do not belong to the flange are made with rebar parts, while the flange has been made with heavy forged materials. A series of notches will be installed to anchor the rail and the autonomous unloading gantries.
2.- Tower:
   2.1.- Structure: The structure can be made of steel or prestressed o postensioned reinforced concrete. The steel is subject to the same treatment as the wind generator towers although cylindrical arches are used, connected by flanges and ferrules to form sections; subsequently, the intermediate notches are welded to the rail. Considering the size of the tower, it is recommended to use concrete to provide a greater stability and stiffness. In this case, it has been made with precast concrete voussoirs, with the rail notches inserted or to be integrated in the mould. The reinforcements and the end housing (bolt 2.3.1" and housing 2.3.2") are made with conventional precasting techniques.
   2.2.- Multi-track helical rail: A modular construction which is subsequently screwed to the notches of the tower sections (2). A specific hot-rolled steel profile will be developed to obtain the staircase shape of the rail. Subsequently, the specific bending of each tower is applied, and then it is machined to obtain the proper finishing of each track, along with the openings used to be connected to the intermediate notches. The rail joints will be reinforced, including a transition area to prevent derailing. The intermediate rail has a series of openings to receive the final toothed rail. If the construction is made of concrete, it will allow to integrate the bracket within the tower wall. The bracket can be reduced to a single track in case that it is used for the autonomous erection of the tower, and not as a storage device, since it only receives one cycle.
   2.3.- Connectors: they are made of high strength steel. The pin-type connectors (2.3.1) are machined from plates, and the thermal contraction connectors (2.3.2) are obtained from commercial-grade steel sections or machined cylinders.
3.- Platform:
   3.1.- Guide bases: they can be purchased from commercial manufacturers of gantry cranes.
   3.2.- Generator group: they can be purchased from commercial manufacturers, with the exception of the adjustment of the coupling to the rail by means of driving gears.
   3.3.- Hydraulic brake group: it can be purchased in the market. It is necessary to fit the outer coupling, which is machined and screwed to the swan neck arm (3.4) for the brake caliper. The hoses are tailor made.
   3.4.- Swan neck arms: they are obtained from a welded and machined laminated section, so that the previous assembly is welded to the arm, which in turn is welded to the main platform (3.5).
   3.5.- Main platform: it is obtained by means of steel forging, from laminated metal sections that are bent, machined, welded and painted until the lattice is obtained. The rollers used at the collector (4) are obtained from industrial manufacturers and the structure is obtained by means of profiles, to screw the bearing bushes, and to this structure, the base of the curved sensors (4.2) is also coupled. The weights (3.6) and the hydraulic group are screwed, and the wiring is subsequently laid.
   3.6.- Weights: made of cast iron, in case of metal weights, or of reinforced concrete or gravel containers
   3.7.- Ancillary items: the platform hoisting tool is obtained from modified crane and gantry components. The base hoisting equipment, the bogie and the remaining items, such as ball bearings, wiring, manoeuvring items, etc. can be purchased from commercial suppliers.
4.- Power collector
   4.1.- Central collector: consisting of a series of curved cylinders made of technical-grade insulating plastic material, screwed to a metal structure; this latter one has been previously bent, machined and welded to obtain the lattice cylinder. Previously, the passing rails and the ball bearings for the guiding lines (4.4) have been drilled and screwed. On the outer face, once the insulating cylinder has been installed, the insulated contact lines (4.3) are screwed once they have been previously curved by the manufacturer, and connected to the sensors (4.2) in charge of the follow up of the insulated contact lines. The inner face receives the insulating cylinder, with the recesses made for the sensors (4.2) that will follow the vertical contact line (4.3). A series of metal sections are curved as a rail, and installed at the ends of the outer cylinder, to support the operation of the ball bearings of the platform, so that thy may remain coupled and aligned with the axis.
   4.2.- Sensors: they are made of copper, supplied by the same manufacturer as the contact lines (4.3).
   4.3.- Insulated contact lines: they can be straight or curved, depending on the position to be used, and are provided by a specialised supplier, along with the sensors (4.2).
   4.4.- Guiding lines: they are made of steel wire, chosen from a sales catalogue, with the necessary end coupling to maintain the appropriate tension.
5.- Elevator-staircase: in both cases, the product is supplied by a commercial manufacturer. The elevator is a product with a modular structure, wherein the cage is coupled. It can be of a fully wired type, i.e., it comprises cable rails, apart from the pulling cable.
6.- Transformer station: chosen from a sales catalogue.
7.- Dome:
   7.1.- Dome: The dome is a metal lattice structure obtained by steel forging, i.e., cut, bent, machined, welded, etc. wherein the components indicated in the description are coupled.
   7.2.- Nacelle adapting reel: it is obtained from laminated metal sections, curved and welded to obtain the main reel. This latter is complemented by the main supporting rails of the internal supporting platform, and a gear rim is screwed to guide the motion of the nacelle. Using laminated metal sections, and applying a steel forging process, the lattice platform and main supporting framework of the nacelle is obtained; the weight-based balancing system is installed on rails mounted at the lattice. The dome will be covered by means of a light enclosure.

All metal parts, once they have been forged, are subject to the relevant painting scheme, after they have been grit-blasted.

Metal items are processed from commercial-grade metal sections, that are machined according to their intended use, i.e., cut, sandblasted, folded, trimmed, and milled, that are very common processes. Joints will be made by welding and screwing. The torque will be verified for all screwed items.

Bolts and pins are obtained from milled round section steel bars, and their quality will be in line with their intended use.

Nuts and bolts, rings, eyebolts, shackles, tensors, etc. used will be obtained from commercial suppliers.

The relevant geometry may vary according to the final use, dimensions, weight, materials... but the main functions of the components remain unaltered.

Similarly, the quality of the materials used will be in line with the technical requirements. A technical name plate will be available at all times, as well as a manual indicating the characteristics and operation.

Once all the components have been obtained and the foundations have been laid, the tower requires the help of a crane (70Ton) at the first ring, until the platform is installed. The remaining concrete slabs will be autonomously hoisted from the platform. Upon their installation, the central body of each connector will be expanded by induction.

### Industrial application

From the above paragraphs, and owing to the nature of the invention, it can be inferred that the helical energy storage unit, as a result of its autonomous assembly, can be used either as a wind generator tower, as a reservoir or in any other way, in all those processes where the storage of power is required, i.e., the storage of potential energy obtained from electric power, for its subsequent conversion and reuse; both during peak and off-peak hours. It represents an increase in the energy efficiency and the optimisation of renewable resources, as it allows the use of power ranges below those currently required for feed-in purposes. Integration of renewable resources. The invention allows to group the facilities from the time of their construction, for instance, in wind farms. Increase of the independence of the renewable natural resources vis-à-vis energy demand. The invention does not require special sites, water resources, large civil works or third processes and is, therefore, perfectly suitable for all kinds economies and locations. It does not generate a significant environmental impact, and does neither use non-recyclable chemicals nor heavy (radioactive) metals in any of the manufacturing and installation stages. Therefore, it is very suitable to preserve the environment and maintain local economy. It is indicated for locations that are prone to undergo seismic hazards, since tits failure does not involve any environmental disasters (of a nuclear, hydraulic, thermal etc. nature). Its modular and autonomous erection allows the invention to reach higher elevations which, along with the fact that no large cranes or special transports are required, optimizes wind farms, as it allows to integrate the manufacturing process of the wind generator tower with that of the structure of the energy storage unit, that can be a single shared process, simultaneously reducing the execution and repayment costs of wind farms. As the height reached can be higher, the performance of the turbine increases and the maintenance costs are reduced, since gusty winds are avoided.

The invention is applicable to the whole energy industry sector, which suffers a series of similar problems, and to any civil or food and agriculture sector which may profit from its advantages (silos, reservoirs, large columns, etc.)

## Claims

1. Self-erecting tower comprising:
• a structure comprising a set of cylindrical arches or voussoirs (2.1);
• a rail (2.2) comprising a set of sections of rail, each one of them disposed in a side of each one of the cylindrical arches or voussoirs (2.1);
• a platform (3) configured to move along such rail (2.2);
• a hoisting tool (3.7) disposed on the platform (3) to carry out the hoisting of at least one cylindrical arch or voussoir (2.1) of the structure of the tower;
**characterized in that** the rail (2.2) is a helical rail (2.2) comprising a set of sections of helical rail, each one of them disposed in an inner side of each one of the cylindrical arches or voussoirs (2.1).

2. Self-erecting tower according to claim 1 **characterized in that** the platform (3) configured to move along the helical rail (2.2) is a rotating platform.

3. Self-erecting tower according to any one of the previous claims **characterized in that** the platform (3) is also configured to store potential energy as it rises along the helical rail (2.2) and to generate kinetic energy when it falls along the helical rail (2.2).

4. Self-erecting tower according to claim 3 **characterized in that** it also comprises at least one generator/electric engine (3.2) solidly mounted on the platform (3) and engaged to the helical rail (2.2) to generate electrical power from the kinetic energy released when the platform (3) falls along the helical rail (2.2), an to be use as a engine to allow the rising of the platform (3) along the helical rail (2.2) and a storage device (4) which is functionally coupled to the generator/electric engine (3.2) to collect the power generated when the platform (3) falls along the helical rail (2.2) and to supply power to allow the rising of such platform (3) along the helical rail (2.2).

5. Self-erecting tower according to claim 4 **characterized in that** it also comprises a transformer station (6) connected to the storage device (4) to collect the power generated when the generator/electric engine (3.2) operates as a generating set, during the fall of the platform (3) along the helical rail (2.2), or to supply power to such generator/electric engine (3.2) when such generator/electric engine (3.2) is operating as an engine to rise the platform (3) along the helical rail (2.2).

6. Self-erecting tower according to any one of the previous claim **characterized in that** it further comprises connectors (2.3) configured to connect the cylindrical arches or voussoirs (2.1), the connectors (2.3) comprising:
• thermal expansion connectors (2.3.2) that are housed in housings respectively provided at the cylindrical arches or voussoirs (2.1), and
• pin-type connectors (2.3.1, 2.3.2, 2.3.1", 2.3.2") that are coupled inside a side wall of the tower.

7. Self-erecting tower according to any one of the previous claims **characterized in that** the platform (3) also comprises:
• at least two guide bases (3.1) being supported by a first track of the helical rail (2.2).

8. Self-erecting tower according to claims 4 and 7 **characterized in that** the helical rail (2.2) also comprises:
• at least a second track to be coupled to the cinematic input/output of the generator/electric engine (3.2) and
• at least a third track which is functionally coupled to a hydraulic brake device (3.3) foreseen at the platform (3).

9. Self-erecting tower according to claim 7 **characterized in that** the platform (3) also comprises:
• a recess that allows the hoisting by the interior of the tower of the at least one cylindrical arch or voussoir (2.1) by means of the hoisting tool (3.7), the recess being disposed between the at least two guide bases (3.1).

10. Self-erecting tower according to any one of the previous claims **characterized in that** the platform (3) comprises swan neck arms (3.4) to connect the platform (3) to the helical rail (2.2), preferably being at least three swan neck arms (3.4) that lay equidistantly and may be vertically adjusted with respect to the helical rail (2.2).

11. Self-erecting tower according to claim 5 **characterized in that** it also comprises a power collector configured to distribute power from the generator (3.2) to the transformer station (6) and vice versa, being moved simultaneously to the rising of the platform (3) and comprises:
• a collector (4.1) that transmits power from the generator (3.2) of the platform (3) to an insulated contact line (4.3).
• insulated sensors used as a railway pantograph comprising poles, wherein each pole of the insulated sensor transmits power through a tracker to a wire located on the outside section of the collector (4.1), being an inner sensor (4.2) for a straight insulated contact line (4.3) and an outer sensor (4.2) for a circular insulated contact line (4.3)
• insulated contact lines (4.3) as in the case of a gantry crane, being internal cables laid on insulated metal sections that lay straight vertically with respect to the tower and in an outer circular section of the collector (4.1).
• Guiding lines being structural cables that cross the collector (4.1) and keep it always in the same relative position during the rising operation, preventing it from turning wherein the guiding lines comprise guide bearings at the ends of the collector (4.1).

12. Self-erecting tower according to any one of the previous claims **characterized in that** an upper end of the tower comprises a dome (7.1).

13. Wind turbine comprising the self-erecting tower according to claim 12 **characterized in that** it comprises a wind generator nacelle (7.2) coupled to the dome (7.1).

## Patentansprüche

1. Selbst aufrichtender Turm bestehend aus:
• einer Struktur, die sich aus mehreren zylindrischen Bögen oder Voussoirs zusammensetzt (2.1)
• einer Schiene (2.2), die aus einer Anordnung von Schienenabschnitten besteht, von denen jeder an einer Seite der einzelnen zylindrischen Bögen oder Voussoirs (2.1) angebracht ist
• einer Plattform (3), die so konzipiert ist, dass sie sich entlang dieser Schiene bewegt (2.2)
• einem Hebewerkzeug (3.7), das auf der Plattform (3) angebracht ist, um das Anheben von mindestens einem zylindrischen Bogen oder Voussoir (2.1) der Turmstruktur vorzunehmen
**dadurch gekennzeichnet, dass** die Schiene (2.2) eine schraubenförmige Schiene (2.2) ist, die eine Anordnung von schraubenförmigen Schienenabschnitten umfasst, von denen jeder an einer Innenseite der einzelnen zylindrischen Bögen oder Voussoirs gelegen ist (2.1).

2. Selbst aufrichtender Turm nach Patentanspruch 1, der **dadurch gekennzeichnet ist, dass** die Plattform (3), die so konstruiert ist, dass sie sich entlang der schraubenförmigen Schiene (2.2) bewegen kann, eine Drehplattform ist.

3. Selbst aufrichtender Turm gemäß jeder der vorhergehenden Patentansprüche, **dadurch gekennzeichnet, dass** die Plattform (3) ferner so konstruiert ist, dass sie mögliche Energie speichert, wenn sie entlang der schraubenförmigen Schiene (2.2) aufsteigt, und dass sie beim Fallen entlang der schraubenförmigen Schiene (2.2) kinetische Energie erzeugt.

4. Selbst aufrichtender Turm gemäß Anspruch 3, **dadurch gekennzeichnet, dass** er außerdem mindestens einen Generator/Elektromotor (3.2) besitzt, der fest auf der Plattform (3) angebracht und mit der schraubenförmigen Schiene (2.2) verbunden ist, um elektrische Energie aus der kinetischen Energie zu erzeugen, die freigesetzt wird, wenn die Plattform (3) entlang der schraubenförmigen Schiene (2.2) fällt; ferner um als Motor genutzt zu werden, um das Anheben der Plattform (3) entlang der schraubenförmigen Schiene (2.2) zu ermöglichen sowie eine Speichervorrichtung (4), die zweckmäßig mit dem Generator/Elektromotor (3.2) zur Speicherung der Energie gekoppelt ist, die erzeugt wird, wenn die Plattform (3) entlang der schraubenförmigen Schiene (2.2) fällt und um Energie für das Anheben einer solchen Plattform (3) entlang der schraubenförmigen Schiene (2.2) zu liefern.

5. Selbst aufrichtender Turm gemäß Anspruch 4, **dadurch gekennzeichnet, dass** er auch eine Trafostation (6) enthält, die mit der Speichervorrichtung (4) verbunden ist, um die Energie zu speichern, die erzeugt wird, wenn der Generator/Elektromotor (3.2) während des Falles der Plattform (3) entlang der schraubenförmigen Schiene (2.2) als Generatorgruppe wirkt oder um diesen Generator/Elektromotor (3.2) mit Energie zu versorgen, wenn dieser Generator/Elektromotor (3.2) als Motor zum Anheben der Plattform (3) entlang der schraubenförmigen Schiene (2.2) dient.

6. Selbst aufrichtender Turm gemäß jedem der vorhergehenden Ansprüche, **dadurch gekennzeichnet, dass** er ferner Verbindungsstücke (2.3) aufweist, die zur Verbindung der zylindrischen Bögen oder Voussoirs (2.1) vorgesehen sind, wobei die Verbindungsstücke (2.3) folgende Bauteile besitzen:
• thermische Expansionsverbinder (2.3.2), die in Gehäusen untergebracht sind, welche jeweils an den zylindrischen Bögen bzw. Voussoirs (2.1) angebracht sind, und
• Stift-Steckverbinder (2.3.1, 2.3.2, 2.3.1 ", 2.3.2"), die innerhalb einer Seitenwand des Turms befestigt sind.

7. Selbst aufrichtender Turm gemäß jedem der vorhergehenden Ansprüche, **dadurch gekennzeichnet, dass** die Plattform (3) auch einschließt:
• mindestens zwei Führungsplatten (3.1), die von einer ersten Spur der schraubenförmigen Schiene (2.2) gehalten werden.

8. Selbst aufrichtender Turm gemäß den Ansprüchen 4 und 7, **dadurch gekennzeichnet, dass** die schraubenförmige Schiene (2.2) ebenfalls einschließt:
• mindestens eine zweite Spur, die mit dem kinematischen Ein-/Ausgang des Generators/Elektromotors (3.2) verbunden werden kann, und
• mindestens eine dritte Spur, die zweckmäßig mit einer an der Plattform (3) vorgesehenen hydraulischen Bremsvorrichtung (3.3) verbunden ist.

9. Selbst aufrichtender Turm gemäß Anspruch 7, **dadurch gekennzeichnet, dass** die Plattform (3) ebenfalls enthält:
• eine Ausbuchtung, die das Anheben von mindestens einem zylindrischen Bogen oder Voussoir (2.1) durch den Innenbereich des Turms mit Hilfe des Hebewerkzeugs (3.7) ermöglicht, wobei die Ausbuchtung zwischen mindestens zwei Führungsplatten (3.1) vorgesehen ist.

10. Selbst aufrichtender Turm gemäß jedem der vorhergehenden Ansprüche, **dadurch gekennzeichnet, dass** die Plattform (3) Schwanenhalsarme (3.4) besitzt, um die Plattform (3) mit der schraubenförmigen Schiene (2.2) zu verbinden, wobei es sich bevorzugt um mindestens drei Schwanenhalsarme (3.4) handeln sollte, die in gleichem Abstand zueinander liegen und bezüglich der schraubenförmigen Schiene (2.2) senkrecht einstellbar sind.

11. Selbst aufrichtender Turm gemäß Anspruch 5, **dadurch gekennzeichnet, dass** er auch einen Stromsammler enthält, der so konstruiert ist, dass er Strom vom Generator (3.2) zur Trafostation (6) und umgekehrt verteilt, wobei er gleichzeitig mit dem Anheben der Plattform (3) bewegt wird und Folgendes aufweist:
• einen Kollektor (4.1), der Strom vom Generator (3.2) der Plattform (3) an eine isolierte Kontaktleitung (4.3) abgibt.
• isolierte Sensoren, die als Stromabnehmer für Schienenwege verwendet werden mit Polen, wobei jeder Pol des isolierten Sensors Strom durch einen Nachfühler an einen Draht übermittelt, der am äußeren Bereich des Kollektors (4.1) angebracht ist, welcher einen inneren Sensor (4.2) für eine lineare isolierte Kontaktleitung (4.3) und einen äußeren Sensor (4.2) für eine kreisförmige isolierte Kontaktleitung (4.3) darstellt.
• isolierte Kontaktleitungen (4.3) wie im Falle eines Brückenkrans, wobei es sich um interne Kabel handelt, die auf isolierten Metallabschnitten verlegt sind, die gerade senkrecht zum Turm und in einem äußeren kreisförmigen Abschnitt des Kollektors (4.1) verlaufen.
• Führungen, die strukturelle Kabel sind, die durch den Kollektor (4.1) verlaufen und ihn während des Aufstiegsvorgangs immer in der gleichen relativen Position halten und ihn am Drehen hindern, wobei die Führungen an den Enden des Kollektors (4.1) ein Führungslager besitzen.

12. Selbst aufrichtender Turm gemäß jedem der vorhergehenden Ansprüche, **dadurch gekennzeichnet, dass** am oberen Ende des Turms eine Kuppel (7.1) angebracht ist.

13. Windturbine einschließlich des selbst aufrichtenden Turms gemäß Anspruch 12, **dadurch gekennzeichnet, dass** sie mit einer mit der Kuppel (7.1) verbundenen Windturbinengondel (7.2) ausgestattet ist.

## Revendications

1. Grue à tour à montage automatisé :
• une structure comprenant une série d'arches cylindriques ou voussoirs (2.1) ;
• un rail (2.2) comprenant une série de sections de rail, chacune étant disposée sur un côté de chacune des arches cylindriques ou voussoirs (2.1) ;
• une plateforme (3) configurée pour se déplacer le long de ce rail (2.2) ;
• un outil de levage (3.7) disposé sur la plateforme (3) pour réaliser le levage d'au moins une arche cylindrique ou voussoir (2.1) de la structure de la tour ;
**caractérisé par le fait que** le rail (2.2) est un rail hélicoïdal (2.2) comprenant une série de sections de rail hélicoïdales, chacune étant disposée sur un côté intérieur de chacune des arches cylindriques ou voussoirs (2.1).

2. Grue à tour à montage automatisé conformément à la revendication 1, **caractérisée par le fait que** la plateforme (3) configurée pour se déplacer le long du rail hélicoïdal (2.2) est une plateforme rotative.

3. Grue à tour à montage automatisé conformément à l'une des revendications précédentes, **caractérisée par le fait que** la plateforme (3) est également configurée pour stocker l'énergie potentielle pendant qu'elle monte le long du rail hélicoïdal (2.2) et pour générer de l'énergie cinétique lorsqu'elle descend le long du rail hélicoïdal (2.2).

4. Grue à tour à montage automatisé conformément à la revendication 3, **caractérisée par le fait qu'**elle comprend également au moins un moteur électrique/ générateur (3.2) solidement monté sur la plateforme (3) et engagé sur le rail hélicoïdal (2.2) pour générer de l'énergie électrique à partir de l'énergie cinétique produite lorsque la plateforme (3) descend le long du rail hélicoïdal (2.2) et un dispositif de stockage (4) qui est couplé, sur le plan fonctionnel, au moteur électrique/ générateur (3.2) pour collecter l'électricité générée lorsque la plateforme (3) descend le long du rail hélicoïdal (2.2) et pour alimenter en électricité et permettre le levage de cette plateforme (3) le long du rail hélicoïdal (2.2).

5. Grue à tour à montage automatisé conformément à la revendication 4, **caractérisée par le fait qu'**elle comprend également un poste de transformation (6) raccordé au dispositif de stockage (4) pour collecter l'électricité générée lorsque le moteur électrique/ générateur (3.2) fonctionne comme un groupe électrogène, lors de la descente de la plateforme (3) le long du rail hélicoïdal (2.2), ou pour alimenter en électricité ce moteur électrique/ générateur (3.2) lorsque ce moteur électrique/ générateur (3.2) fonctionne comme un moteur pour le levage de la plateforme (3) le long du rail hélicoïdal (2.2).

6. Grue à tour à montage automatisé conformément à l'une des revendications précédentes, **caractérisée par le fait qu'**elle comprend également des raccords (2.3) configurés pour joindre les arches cylindriques ou voussoirs (2.1), les raccords (2.3) comprenant :
• des raccords à dilatation thermique (2.3.2) qui sont contenus dans des boîtiers fournis respectivement aux arches cylindriques ou voussoirs (2.1) et
• des raccords de type broche (2.3.1,2.3.2, 2.3.1 ", 2.3.2") qui sont couplés à l'intérieur d'une paroi latérale de la tour.

7. Grue à tour à montage automatisé conformément à l'une des revendications précédentes, **caractérisée par le fait que** la plateforme (3) comprend également :
• au moins deux châssis (3.1) soutenus par un premier bâti du rail hélicoïdal (2.2).

8. Grue à tour à montage automatisé conformément aux revendications 4 et 7, **caractérisée par le fait que** le rail hélicoïdal (2.2) comprend également :
• au moins un second bâti à coupler sur l'entrée/ la sortie cinématique du moteur électrique/ générateur (3.2) et
• au moins un troisième bâti qui est couplé, sur le plan fonctionnel, à un dispositif de freinage hydraulique (3.3) prévu sur la plateforme (3).

9. Grue à tour à montage automatisé conformément à la revendication 7, **caractérisée par le fait que** la plateforme (3) comprend également :
• un renfoncement qui permet le levage par l'intérieur de la tour d'au moins une arche cylindrique ou voussoir (2.1) par le biais de l'outil de levage (3.7), le renfoncement étant disposé entre au moins deux châssis (3.1).

10. Grue à tour à montage automatisé conformément à l'une des revendications précédentes, **caractérisée par le fait que** la plateforme (3) comprend des bras en col de cygne (3.4) pour raccorder la plateforme (3) au rail hélicoïdal (2.2), de préférence s'agissant d'au moins trois bras en col de cygne (3.4) placés à égale distance, et qui peuvent être ajustés verticalement par rapport au rail hélicoïdal (2.2).

11. Grue à tour à montage automatisé conformément à la revendication 5, **caractérisée par le fait qu'**elle comprend également un collecteur de courant configuré pour distribuer l'électricité provenant du générateur (3.2) vers le poste de transformation (6) et vice-versa, déplacé de manière simultanée avec le levage de la plateforme (3) et comprenant :
• un collecteur (4.1) qui transmet l'électricité du générateur (3.2) de la plateforme (3) à une ligne de contact isolée (4.3).
• des capteurs isolés utilisés comme un pantographe des chemins de fer comprenant des poteaux, chaque poteau du capteur isolé transmettant l'électricité par le biais d'un suiveur vers un fil situé à l'extérieur du collecteur (4.1), s'agissant d'un capteur interne (4.2) pour une ligne de contact isolée droite (4.3) et un capteur extérieur (4.2) pour une ligne de contact isolée circulaire (4.3).
• des lignes de contact isolées (4.3) comme pour une grue portique, les câbles intérieurs étant placés sur des sections métalliques isolées situées verticalement par rapport à la grue à tour et dans une section circulaire extérieure du collecteur (4.1).
• des lignes de guidage s'agissant de câbles structurels qui croisent le collecteur (4.1) et le maintiennent éloigné à la même position relative pendant le levage, en l'empêchant de tourner, sachant que les lignes de guidage comprennent des paliers-guides au bout du collecteur (4.1).

12. Grue à tour à montage automatisé conformément à l'une des revendications précédentes, **caractérisée par le fait qu'**une extrémité supérieure de la tour comprend un dôme (7.1).

13. Éolienne comprenant une grue à tour à montage automatisé, conformément à la revendication 12, **caractérisée par le fait qu'**elle comprend une nacelle (7.2) couplée au dôme (7.1).
